# EUROPÄISCHE PATENTSCHRIFT

(11) **EP 2 050 596 B1**
(45) Veröffentlichungstag und Bekanntmachung des Hinweises auf die Patenterteilung: **18.11.2015**
(21) Anmeldenummer: 08014327.4
(22) Anmeldetag: 12.08.2008
(51) Int. Cl.: B60G 17/052, B60T 13/26, B60T 17/02, B60T 17/22

(54) **Elektronische Luftaufbereitungsanlage**
Electronic air supply device
Dispositif électronique d'alimenation en air

(30) Priorität: 20.10.2007 DE 102007050222
(43) Veröffentlichungstag der Anmeldung: 22.04.2009
(73) Patentinhaber: WABCO GmbH, 30432 Hannover (DE)
(72) Erfinder: Diekmeyer, Heinrich, 30890 Barsinghausen (DE); Lippelt, Frank-Dietmar, 30890 Barsinghausen (DE); Reinhardt, Joachim, 30455 Hannover (DE); Strilka, Bernd, 30459 Hannover (DE)

(56) Entgegenhaltungen:
- EP-A- 1 361 132
- WO-A-98/47751
- WO-A-2005/014353
- DE-A1- 19 515 895
- DE-C2- 10 004 091
- US-A- 4 071 284

## Beschreibung

Die Erfindung betrifft eine elektronische Luftaufbereitungsanlage für mit einer Luftfederungsanlage ausgerüstete Fahrzeuge gemäß Oberbegriff des Anspruchs 1.

Eine Luftaufbereitungsanlage nach dem Oberbegriff des Anspruchs 1 ist aus der WO 2005/014353A1 bekannt.

Durch die DE 195 15 895 A1 ist ein Luftkompressor bekannt, von dessen Ausgang zur Versorgung der Druckluftanlage eine Förderleitung zu einem Lufttrockner führt. Die Förderleitung ist ausgangsseitig des Lufttrockners in zu wenigstens zwei Verbraucherkreisen führende Leitungszweige verzweigt. Der Druck in den Verbraucherkreisen ist durch Drucksensoren überwachbar. Es ist eine Steuerelektronik vorgesehen, an welche die Drucksensoren angeschlossen sind. Die Verbraucherkreise sind durch ein von der programmierbaren Steuerelektronik schaltbares, im jeweiligen Förderleitungszweig liegendes Sperrglied von der Druckluftversorgung abtrennbar. Hierdurch ist die Zufuhr von Druckluft in die Verbraucherkreise und die Entnahme von Druckluft zur Überleitung von einem Kreis in den anderen von der Steuerelektronik steuerbar. Das Sperrglied wird gebildet durch ein Überströmventil, das durch ein zusätzliches Betätigungsmittel in eine den zugeordneten Leitungszweig sperrende Stellung schaltbar sind. Das Betätigungsmittel kann ein pneumatisches, elektromagnetisches oder elektromechanisches Betätigungsmittel sein. Nachteilig bei dieser bekannten Druckluftversorgungseinrichtung ist, dass für jedes Überströmventil ein eigenes Betätigungsmittel, bspw. Magnetventil, zur Betätigung vorgesehen ist.

Durch die WO 09847751 A1 ist ein pneumatisches Fahrzeug-Bremssystem bekannt, dass einen Kompressor, wenigstens einen Luftverbraucherkreis, beispielsweise Betriebsbremskreise, einen Parkbremskreis, einen Niederdruck-Hilfskreis und einen Hochdruckkreis aufweist, wobei die Kreise Druckluftbehälter und Bedarfsventile (demand valves) aufweisen. Zwischen dem Kompressor und jedem Verbrauchskreis befindet sich ein erstes, im Grundzustand geschlossenes, elektrisch betätigbares Ventil und zwischen dem Kompressor und dem Hilfskreis ein zweites im Grundzustand offenes, elektrisch betätigbares Ventil. Die Ventile werden von einer elektronischen Steuereinheit betätigt. Die Ausgangsanschlüsse der ersten Ventile der Luftverbraucherkreise sind über Rückschlagventile mit dem Ausgangsanschluss des zweiten normalerweise offenen Ventils verbunden. Sollte Druckluft bedarf in einem der Kreise bestehen, beispielsweise bedingt durch zu niedrigen Behälterdruck, wird das entsprechende Ventil durch die Steuereinheit aufgesteuert, wodurch der Luftbedarf vom Kompressor gedeckt wird, wobei gleichzeitig das zweite Ventil des Hilfskreises geschlossen wird. Ein Ausfall des Kompressors führt zu einem Druckabfall, der von der Steuereinheit erkannt wird, die die Ventile schließt bzw. geschlossen hält, wodurch der Druck in den Kreisen gehalten wird. Ein Druckregelventil bestimmt die Druckhöhe. Bei Ausfall des Druckregelventiles wird Überdruck durch ein Überdruckventil abgelassen. Drucksensoren überwachen die Kreise. Über das zweite normalerweise offene Ventil und über den Kreisen vorgeschaltete Rückschlagventile werden die Kreise mit Luft versorgt. Fällt das elektrische System aus, schalten alle Ventile in den Grundzustand. Der Kompressor läuft trotzdem und versorgt die Kreise über das zweite normalerweise offene Ventil des Hilfskreises mit Luft, wobei der Systemdruck durch ein Sicherheitsventil des Hilfskreises bestimmt wird. Fällt ein Ventil aus, kann der zugeordnete Kreis über das Ventil des Hilfskreises und das Rückschlagventil mit Luft versorgt werden. Das bekannte System ist aufwendig, da jeder Verbraucherkreis mit einem Druckluftbehälter ausgestattet ist.

Durch die DE 10004091 C2 ist eine Druckluftversorgungseinrichtung für Fahrzeug-Druckluftanlagen mit einem Mehrkreis-Schutzventil, einem Druckregler, einer Versorgungsleitung zur Versorgung der Kreise des Mehrkreis-Schutzventils mit Druckluft, und einem Kompressor bekannt, der mittels einer pneumatischen Schaltvorrichtung schaltbar ist, wobei ein Vorsteuerventil vorgesehen ist, dass den Druckregler und die Schaltvorrichtung steuert, wobei zwischen dem Vorsteuerventil und der Schaltvorrichtung eine Drossel vorgesehen ist. Jeder Kreis weist einen Druckluftbehälter auf. Das Vorsteuerventil wird durch eine Steuer- und/oder Regelelektronik gesteuert und/oder geregelt. Drucksensoren überwachen den Druck in den Kreisen und in der Versorgungsleitung. Bei dieser bekannten Druckluftversorgungseinrichtung, die auch zur Druckluftversorgung von Luftfederungsanlagen vorgesehen ist, muss der Luftfederkreis mit einem Druckluftbehälter ausgerüstet seien, um die EU- Bremsen-Richtlinien zu erfüllen. Die bekannte Druckluftversorgungseinrichtung ist dadurch konstruktiv aufwendig und damit entsprechend mit hohen Kosten verbunden.

Die Aufgabe der vorliegenden Erfindung besteht darin, eine Luftaufbereitungsanlage der eingangs genannten Art so auszubilden, dass nach Ausfall eines Bremskreises für den intakten Bremskreis ein möglichst hohes Druckniveau bereitgestellt wird.

Diese Aufgabe wird durch die Erfindung gemäß Anspruch 1 gelöst.

Vorteilhafte und zweckmäßige Ausgestaltungen der erfindungsgemäßen Aufgabenlösung sind in den Unteransprüchen angegeben.

Die Erfindung sieht direkt oder indirekt gesteuerte Ventile, insbesondere Magnetventile, für die einzelnen Verbraucherkreise vor und schlägt vor, bei Ausfall eines Bremskreis diesen Bremskreis mittels eines zugeordneten Ventils, vorzugsweise Magnetventils, zu sperren und den intakten Bremskreis auf ein höheres Druckniveau zu befüllen, wodurch sich der minimale Bremskreisdruck entsprechend erhöht und das Druckband erst bei einem höheren Druck beginnt. Durch die erfindungsgemäß ausgebildete Luftaufbereitungsanlage ergibt sich eine Erhöhung der Fahrzeugsicherheit, weil bei Ausfall eines Bremskreises die maximal mögliche Bremsenergie für den verbleibenden intakten Bremskreis bereitgestellt wird. Die erfindungsgemäße Ausbildung lässt eine Reduzierung der Bremszylindergröße zu.

Die Erfindung soll nachfolgend anhand der beigefügten Zeichnung, die ein Ausführungsbeispiel einer erfindungsgemäßen Luftaufbereitungsanlage zeigt, näher erläutert werden.

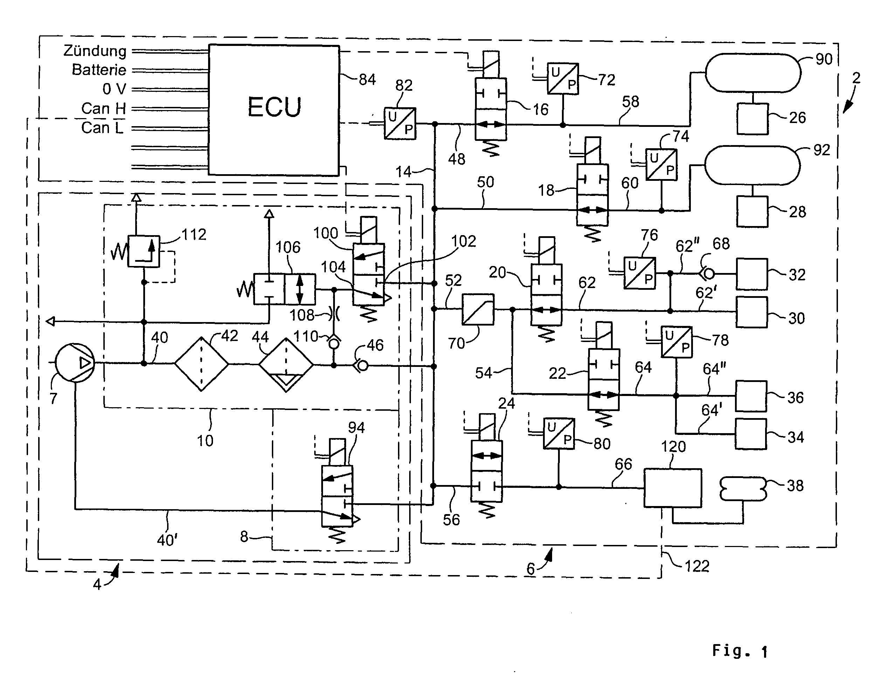

Es zeigt
- Fig.1: einen Prinzipschaltplan einer erfindungsgemäßen Druckluftaufbereitungsanlage und
- Fig.2: eine grafische Darstellung des mit der erfindungsgemäßen Druckaufbereitungsanlage erzielbaren Druckbandes im Vergleich zum normalen Druckband und im Vergleich zu einem Druckband, bei dem auch der Maximaldruck zusätzlich zum Minimaldruck erhöht ist.

Druckmittelleitungen sind in der Zeichnung durchgezogene Linien, elektrische Leitungen sind gestrichelte Linien.

Die Zeichnung zeigt eine Druckluftaufbereitungsanlage 2 mit einem Druckluftversorgungsteil 4 und einem Verbraucherteil 6. Der Druckluftversorgungsteil 4 umfasst einen Kompressor 7, eine Kompressor - Steuereinrichtung 8 und ein Lufttrocknerteil 10.

Der Verbraucherteil 6 weist eine Druckluftverteilerleitung 14, mehrere elektrisch direkt oder indirekt betätigbare Ventile 16, 18, 20, 22, 24, vorzugsweise Magnetventile, mit Rückstellfeder und mehrere über die Ventile mit Druckluft versorgte Verbraucherkreise 26,28, 30, 32,34, 36,38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50,52, 54,56 abzweigen. Von den Ventilen 16, 18, 20, 24 führen Druckluftleitungen 58, 60,62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Ventil 22 führende Leitung 54 ab. Die Leitung 64 verzweigt sich in zu den Kreisen 34 und 36 führenden Leitungen 64' und 64".

Drucksensoren 72,74, 76,78, 80,82 überwachen den Druck in den Verbraucherkreisen und in der Verteilerleitung 14 und geben den jeweiligen Druck als Drucksignal an eine elektronische Steuereinheit 84, die die Ventile direkt steuert.

Die Verbraucherkreise 26,28 können beispielsweise Betriebsbremskreise, der Verbraucherkreis 30 kann ein Anhängerbremskreis, wobei normalerweise zwei Leitungen zum Anhänger führen, der Verbraucherkreis 32 ein Feststellebremskreis mit Federspeicher, die Verbraucherkreise 34 und 36 können Nebenverbrauchskreise, wie Fahrerhausfederung, Türsteuerung etc., alles was nichts mit den Betriebsbremskreisen zu tun hat, und der Verbraucherkreis 38 ist ein Hochdruckkreis für eine Luftfederungsanlage ( als Luftbalg dargestellt ) ausgebildet. Eine Luftfederungsanlage benötigt normalerweise Hochdruck, weil die Luftfederbälge viel Volumen und relativ hohe Drücke aufweisen.

Die Betriebsbremskreise 26,28 weisen Druckluftbehälter 90,92 entsprechend den Richtlinien 98/12/ EG auf.

Der Kompressor 7 wird über die Kompressorsteuerung 8 mechanisch (pneumatisch) gesteuert. Die Kompressor - Steuerung 8 umfasst ein durch die elektronische Steuereinheit 84 schaltbares Ventil 94, das im stromlosen Grundzustand, wie dargestellt, entlüftet ist. In diesem Zustand ist der Kompressor 7 eingeschaltet und wenigstens ein Verbraucherkreis wird mit Druckluft befüllt. Bei Erreichen einer eingestellten Druckschwelle schaltet die Steuereinheit 84 das Ventil 94 um, so dass Druckluft über eine Leitung 40' den druckluftbetätigbaren Kompressor 7 ausschaltet. Wird das Ventil 94 stromlos geschaltet für ein erneutes Auffüllen infolge eines Luftverbrauchs, wird das Ventil 94 wieder in den in der Zeichnung dargestellten Grundzustand geschaltet und die Leitung 40' entlüftet, so dass der Kompressor 7 eingeschaltet wird. Alternativ zu der beschriebenen Ausführungsform kann dem Ventil 94 ein pneumatisch schaltbares Ventil nachgeschaltet sein, das im nicht betätigten Grundzustand entlüftet ist zur Entlastung des Kompressors 7 im betätigten Zustand.

Der Lufttrocknerteil 10 umfasst ein Ventil 100 (mit kleiner Nennweite), dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zur Entlastung des Kompressors dient.

Wenn das Ventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90,92 der Betriebsbremskreise) über das Ventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Ventile 16 bis 24 werden direkt von der Steuereinheit 84 gesteuert, wobei die Ventile 16 bis 22 der Verbraucherkreise 26 bis 34 im stromlosen Zustand offen sind, während das Ventil 24 des Hochdruck-Luftfederungskreises 38 im stromlosen Grundzustand geschlossen ist. Der Druck in den Kreisen wird unmittelbar überwacht durch die Drucksensoren 72 bis 80. Der Luftfederungskreis 38 wird durch eine Steuereinrichtung 120 elektronisch gesteuert ( auch als ECAS bekannt ), die über eine Datenleitung 122 mit der elektronischen Steuereinheit 84 verbunden ist.

Sollte in einem Verbraucherkreis, beispielsweise im Kreis 30 (Feststellbremskreis) der Druck absinken, erfolgt die Druckluftversorgung durch die Betriebsbremskreise über die offenen Ventile mit, wobei der Druck in den Nebenverbraucherkreisen 30 bis 36 durch den Druckbegrenzer 70 auf ein niedrigeres Niveau, beispielsweise 8,5 bar, als das Druckniveau, beispielsweise 10,5 bar, der Betriebsbremskreise 26 und 28 eingestellt wird. Der Luftfederungskreis 38 ist durch das Ventil 24 abgesperrt und steht somit nicht mit den übrigen Kreisen in Verbindung. Er weist häufig ein höheres Druckniveau, beispielsweise 10,5 bar auf.

Die über die Datenleitung 122 mit der elektronischen Steuereinheit 84 verbundene Steuereinrichtung 120 schickt bei Druckluftbedarf, beispielsweise infolge einer Leckage ein Druckluft-Anforderungssignal über die Datenleitung an die elektronische Steuereinheit 84. Diese prüft, ob die Drücke in den Bremskreisen 26 und 28 den vorgeschriebenen Sollwerten entsprechen. Ist dies der Fall, schaltet die Steuereinheit 84 das Ventil 24 aus der geschlossenen Grundstellung in die offene Stellung, wodurch eine Verbindung über die normal offenen Ventile 16, 18 mit den Behältern 90, 92 der Betriebsbremskreise hergestellt wird. Der Luftfederungskreis 38 wird dann aus den Druckluftbehältern 90, 92 der Bremskreise 26, 28 über deren offene Ventile 16, 18 befüllt. Sinkt der Druck in den Bremskreisen unter den vorgeschriebenen Wert, wird dies der elektronischen Steuereinheit 84 vom Bremskreis mitgeteilt. Die Steuereinheit 84 schließt daraufhin das Ventil 24 und schaltet den Kompressor 7 über die Kompressor-Steuereinrichtung 8 ein. Der Kompressor fördert in die Bremskreise. Wenn deren Solldruck wieder erreicht ist, schaltet die elektronische Steuereinrichtung 84 das Ventil 24 des Luftfederungskreises 38 wieder in die Offenstellung, so dass der Luftfederungskreis weiter über die Bremskreise bzw. deren Druckluftbehälter 90, 92 aufgefüllt wird. Dieses zyklische Auffüllen durch die Bremskreise wird solange fortgesetzt, bis der Soldruck im Luftfederungskreis 38 erreicht ist. Dann wird das Ventil 24 wieder geschlossen.

Der Kompressor fördert normalerweise nur in die Bremskreise 26, 28. Er kann auch - falls erforderlich - in den Luftfederungskreis fördern, wozu dann vorzugsweise die Ventile 16, 18 der Bremskreise geschlossen werden. Die Ventile 20 und 22 der Nebenverbraucherkreise können offen bleiben, da der Druck in den zugeordneten Verbraucherkreisen 30 -36 durch den Druckbegrenzer 70 begrenzt wird.

Der Luftfederkreis 38 hat, wie oben schon erwähnt, in der Regel ein höheres Druckniveau als die anderen Kreise; er braucht aber relativ selten Druck und ist daher erfindungsgemäß stromlos geschlossen. Er benötigt auch nicht innerhalb sehr kurzer Zeit (msec oder Bruchteilen von Sekunden) bei Bedarf seine Druckluft, so dass man eine gewisse Totzeit in Kauf nehmen kann für die Kommunikation mit der elektronischen Steuereinheit 84 ; der Luftfederkreis ist daher normal geschlossen. Die Kreise 30 bis 36 werden aus den Behältern 90 und 92 der Betriebsbremskreise 26 und 28 versorgt, so dass während der normalen Fahrt deren Ventile 16, 18, 20, und 22 stromlos offen sind.

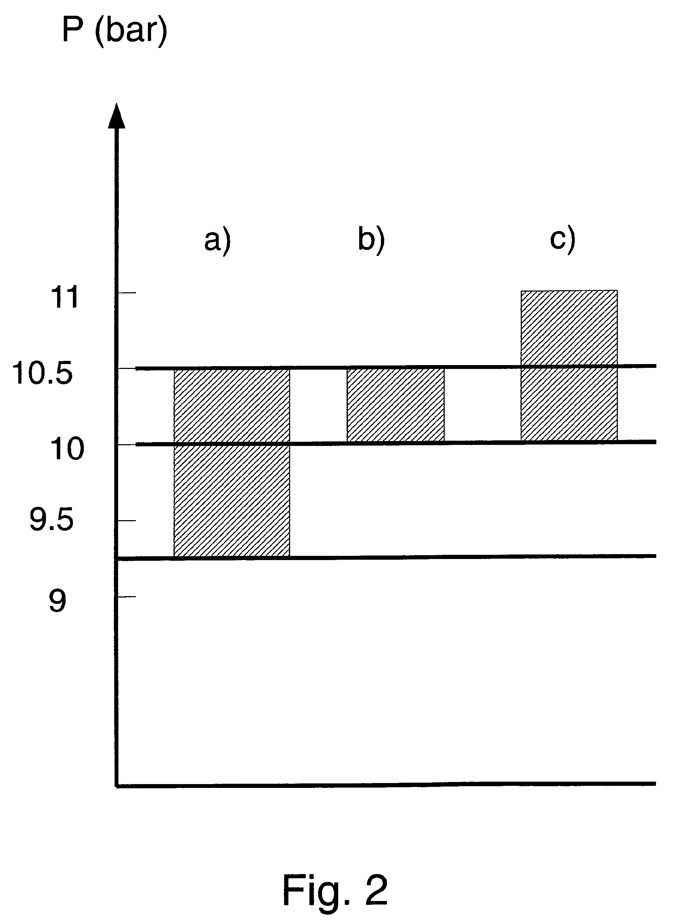

Fällt der Druck in einem der Bremskreise 26, 28 unter den vorgeschriebenen minimalen Wert infolge Ausfalls dieses Bremskreises, erkennt dies die elektronische Steuereinrichtung 84, die daraufhin das dem ausgefallenen Bremskreis vorgeschaltete Ventil 16 oder 18 in den Sperrzustand schaltet und gleichzeitig den unteren Druckschwellwert des normalen Druckbandes des intakten Bremskreises auf einen höheren Wert legt, so dass dieser Bremskreis auf ein höheres Druckniveau aufgefüllt wird. Hierdurch wird eine höhere Bremsenergie für den intakten Bremskreis bereitgestellt, was die Sicherheit des Fahrzeugs erhöht. Eine weitere Erhöhung der Bremsenergie kann dadurch erreicht werden, wenn zusätzlich auch der obere Druckschwellwert erhöht wird, vgl. Fig. 2, in der a) das normale Druckband mit einem unteren Schwellwert von 9 bar und einem oberen Schwellwert von 10,5 bar - ohne Ausfall eines Bremskreises, b) das erfindungsgemäß eingestellte Druckband mit bspw. auf 10 bar angehobenem unterem Schwellwert und beibehaltenem oberen Schwellwert von 10,5 bar - bei Ausfall eines Bremskreises und c) ein erfindungsgemäß eingestelltes Druckband mit bspw. auf 10 bar angehobenem unteren Schwellwert und mit zusätzlich bspw. auf 11 bar angehobenem oberen Schwellwert - bei Ausfall eines Bremskreises.

## Patentansprüche

1. Elektronische Luftaufbereitungsanlage, insbesondere für Nutzfahrzeuge, mit einem einen Kompressor (7) und einen Lufttrockner (44) aufweisenden Druckluftversorgungsteil und einem Druckluftverbraucherteil mit mehreren Druckluftverbraucherkreisen, die Druckluftbehälter (90, 92)aufweisende Betriebsbremskreise (26, 28) umfassen und über elektrisch direkt oder indirekt betätigbare Ventile (16, 18, 20, 22, 24) mit Druckluft versorgt werden, wobei zumindest der Druck in den Betriebsbremskreisen durch Drucksensoren (72, 74)überwacht wird, deren elektrische Signale von einer elektrischen Steuereinheit (84) ausgewertet werden, die die elektrisch direkt oder indirekt betätigbaren Ventile steuert, wobei die elektrische Steuereinrichtung (84) bei Ausfall eines Betriebsbremskreises (26 oder 28) das dem ausgefallenen Betriebsbremskreis vorgeschaltete Ventil (16 oder 18) in den die weitere Druckluftzufuhr zum ausgefallenen Betriebsbremskreis (26 oder 28) verhindernden Sperrzustand schaltet, **dadurch gekennzeichnet, dass** die elektrische Steuereinheit gleichzeitig den unteren Schwellwert eines in der elektrischen Steuereinrichtung (84) abgelegten Druckbandes des intakten Betriebsbremskreises (28 oder 26) auf einen höheren Wert bezogen auf den unteren Schwellwert eines normalen Druckbandes verschiebt.

2. Elektrische Luftaufbereitungsanlage nach Anspruch 1, **dadurch gekennzeichnet, dass** die elektrische Steuereinrichtung (84) zusätzlich den oberen Schwellwert auf einen höheren Wert bezogen auf den oberen Schwellwert des normalen Druckbandes verschiebt.

3. Elektrische Luftaufbereitungsanlage nach Anspruch 1, **dadurch gekennzeichnet, dass** die Ventile Magnetventile sind.

## Claims

1. Electronic air supply device in particular for utility vehicles, having a compressed air supply part which has a compressor (7) and an air dryer (44), and a compressed air consumer part with a plurality of compressed air consumer circuits which comprise service brake circuits (26, 28) having compressed air containers (90, 92), and which are supplied with compressed air via valves (16, 18, 20, 22, 24) which can be electrically activated directly or indirectly, wherein at least the pressure in the service brake circuits is monitored by pressure sensors (72, 74) whose electrical signals are evaluated by an electric control unit (84) which controls the valves which can be electrically activated directly or indirectly, wherein in the event of failure of a service brake circuit (26 or 28) the electric control device (84) switches the valve (16 or 18), which is connected upstream of the failed service brake circuit, into the off state which prevents the further supply of compressed air to the failed service brake circuit (26 or 28), **characterized in that** the electric control unit simultaneously shifts the lower threshold value of a pressure band, stored in the electric control device (84) of the intact service brake circuit (28 or 26) to a higher value with respect to the lower threshold of a normal pressure band.

2. Electric air supply device according to Claim 1, **characterized in that** the electric control device (84) additionally shifts the upper threshold value to a higher value with respect to the upper threshold value of the normal pressure band.

3. Electric air supply device according to Claim 1, **characterized in that** the valves are solenoid valves.

## Revendications

1. Installation électronique de conditionnement d'air, en particulier pour des véhicules utilitaires, comprenant une partie d'alimentation en air comprimé présentant un compresseur (7) et un dispositif de séchage d'air (44) et une partie consommatrice d'air comprimé avec plusieurs circuits consommateurs d'air comprimé qui comprennent des circuits de frein de service (26, 28) présentant des récipients d'air comprimé (90, 92) et qui sont alimentés en air comprimé par le biais de soupapes (16, 18, 20, 22, 24) pouvant être commandées électriquement directement ou indirectement, au moins la pression dans les circuits de frein de service étant contrôlée par des capteurs de pression (72, 74) dont les signaux électriques sont analysés par une unité de commande électrique (84) qui commande les soupapes pouvant être commandées électriquement directement ou indirectement, le dispositif de commande électrique (84), lors d'une défaillance d'un circuit de frein de service (26 ou 28), commutant la soupape (16 ou 18), montée en amont du circuit de frein de service en panne, dans l'état de blocage empêchant une poursuite de l'alimentation en air comprimé au circuit de frein de service en panne (26 ou 28), **caractérisée en ce que** l'unité de commande électrique décale simultanément la valeur seuil inférieure d'une bande de pression consignée dans le dispositif de commande électrique (84) du circuit de frein de service intact (28 ou 26) à une valeur plus élevée par rapport à la valeur seuil inférieure d'une bande de pression normale.

2. Installation électrique de conditionnement d'air selon la revendication 1, **caractérisée en ce que** le dispositif de commande électrique (84) décale en outre la valeur seuil supérieure à une valeur plus élevée par rapport à la valeur seuil supérieure de la bande de pression normale.

3. Installation électrique de conditionnement d'air selon la revendication 1, **caractérisée en ce que** les soupapes sont des électrovannes.
